# EUROPEAN PATENT SPECIFICATION

(11) **EP 3 086 346 B1**
(45) Date of publication and mention of the grant of the patent: **13.06.2018**
(21) Application number: 15164679.1
(22) Date of filing: 22.04.2015
(51) Int. Cl.: H01H 9/16, H01H 33/66, H01H 71/04, G01V 8/20

(54) **DETECTION DEVICE TO DETERMINE WHETHER OR NOT A MOBILE ELEMENT OCCUPIES A FIRST OR A SECOND POSITION RELATIVE TO A FIXED ELEMENT**
NACHWEISVORRICHTUNG ZUR BESTIMMUNG, OB EIN BEWEGLICHES ELEMENT EINE ERSTE ODER ZWEITE LAGE RELATIV ZU EINEM FESTSTEHENDEN TEIL EINNIMMT
DISPOSITIF DE DÉTECTION PERMETTANT DE DÉTERMINER SI OUI OU NON UN ÉLÉMENT MOBILE OCCUPE UNE PREMIÈRE OU UNE SECONDE POSITION PAR RAPPORT À UN ÉLÉMENT FIXE

(43) Date of publication of application: 26.10.2016
(73) Proprietor: General Electric Technology GmbH, 5400 Baden (CH)
(72) Inventor: Berard, David, 69100 Villeurbanne (FR); Fallet, Jérôme, 69100 Villeurbanne (FR); Taponat, Didier, 69100 Villeurbanne (FR)
(74) Representative: Fischer, Michael Maria

(56) References cited:
- CN-U- 204 088 111
- DE-A1- 19 605 973
- DE-C1- 19 519 721
- DE-U1- 29 602 868

## Description

### TECHNICAL FIELD

The invention relates to detection of the position of an element such as the movable contact of an electrical switch, to identify if it is in the open or closed state, this movable contact being movable from one position to the other which, the change of state being performed in a very short operating time.

### STATE OF PRIOR ART

The invention is particularly applicable to a vacuum switch such as an isolating switch or a circuit breaker, in which electrical contact is set up within a vacuum tube, through a mobile contact element that has to be moved over a distance of a few millimetres in a few milliseconds.

In general, such a system is expected to have a very short opening and closing time, and also the detection of its state must be reactive, precise, reliable, and inexpensive.

It is possible that the operation of the mobile contact of such a device can be defective, for example leading to a situation in which the mobile contact remains stuck in the closed position although it has been ordered to be open.

If a detection device does not have sufficient reactivity, precision or reliability, then the management system of an installation containing such devices will assume that a device is electrically open although it is actually electrically closed. Examples of detection devices are disclosed in the publications CN 204 088 111 U, DE 296 02 868 U1 and DE 196 05 973 A1. Patent application FR2690757 discloses a method of performing such a detection with a single optical fiber to send and receive light radiation reflected by a mirror. In this architecture, the system detects that the mobile contact is present when it interrupts the emitted signal by preventing its reflection.

The fact that this system uses a single optical fiber for sending and for reception implies that complex and expensive signal processing electronics is necessary for sufficient reactivity.

Furthermore, this system is found to be too imprecise to be usable for detecting strokes of small parts. In practice, detection of the closed state of such a device consists of determining if its mobile contact occupies a certain determined position. But detection of the open state involves determining if this mobile contact is at a certain distance from its closed position by a minimum distance, below which an electric arc can exist between its contacts.

In other words, the fact that the mobile electrical contact is not in its closed position is not sufficient to conclude that it is open; if the distance between the mobile contact and the fixed contact is too small, an electric arc can exist between these contacts and the system is then electrically closed instead of being open. Conversely, the fact that the electrical contact is not in the open position is not sufficient to conclude that the switch would be electrically closed.

This is why the precision of the position detection of such a device is decisive for its use on site.

### PRESENTATION OF THE INVENTION

The purpose of the invention is a detection device as set forth in claim 1. Further embodiments are inter alia disclosed in the dependent claims. With the invention, the dimensions of the pad may be much larger than the travel distance separating the two positions to be detected, while providing precise, reliable and fast detection.

The invention can thus detect a a small amplitude displacement, in the order of a few millimetres using a pad with dimensions in the order of some millimeters. The detection signal can be set up and sent very quickly to a supervision unit because position detection requires very simple electronics without complex signal processing.

A control unit may be connected to the device by optical fibers so that this control unit can be completely isolated from the high voltage environment in which the device is installed.

The invention also relates to a device such as defined above, in which the emitters and receivers are supported on a base that will be fixed to the fixed element, the pad being designed to be fixed on the mobile element.

The invention also relates to a device such as defined above, comprising a first module containing the first emitter and the first receiver, and a second module containing the second emitter and the second receiver.

The invention also relates to a device such as defined above, in which the emitters are oriented parallel to each other along a direction perpendicular to the direction of displacement of the mobile element, the emitters being spaced at a distance from each other by a difference corresponding to the length of the pad along the direction of displacement plus the distance separating the first position from the second position along the direction of displacement.

The invention also relates to a device such as defined above, comprising means of connecting each light beam emitter to a light source by at least one optical fiber, and means of connecting each light beam receiver to a light sensor by at least one optical fiber.

The invention also relates to a device such as defined above, comprising a central unit connected to each emitter and to each receiver by optical fibers, this central unit comprising at least one light source and at least one light sensor.

The invention also relates to a device such as defined above, wherein the control unit uses lock-in techniques to be insensitive to parasitic light.

The invention also relates to a switch, such as an isolating switch or a circuit breaker, fitted with a device such as defined above.

### BRIEF DESCRIPTION OF THE DRAWINGS

Figure 1 shows an overview of a vacuum interrupter including one mobile contact element and which is designed to be included in an electrical switch;
Figure 2 is an overview of the vacuum interrupter in figure 1 fitted with a detection device according to a first embodiment of the invention when the mobile contact is in an electrically open position;
Figure 3 is an overview of the vacuum interrupter in figure 1 fitted with a detection device according to a second embodiment of the invention when the mobile contact is in an intermediate position;
Figure 4 is a sectional view of the vacuum interrupter in figure 1 fitted with a detection device according to a first embodiment of the invention when the mobile contact is in a closed position;
Figure 5 is a sectional view of the vacuum interrupter in figure 1 fitted with a detection device according to a first embodiment of the invention when the mobile contact is in an open position;
Figure 6 is a sectional view of the vacuum interrupter in figure 1 fitted with a detection device according to a second embodiment of the invention when the mobile contact is in a closed position;
Figure 7 is a sectional view of the vacuum interrupter in figure 1 fitted with a detection device according to a second embodiment of the invention when the mobile contact is in an open position.

### DETAILED PRESENTATION OF PARTICULAR EMBODIMENTS

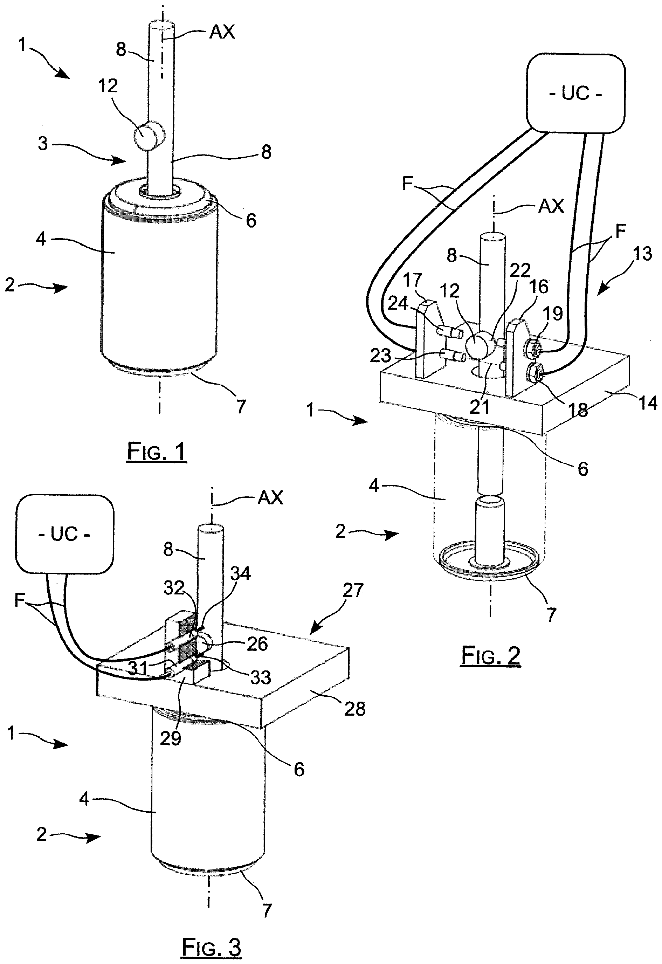

In figure 1, a vacuum interrupter identified by mark 1 comprises a sealed envelope called tube 2, in this case cylindrical in shape about an axis of revolution AX that encloses a fixed contact not visible in figure 1, and a mobile contact 3.

The sealed envelope 2 comprises a cylindrical wall 4 with one end closed by a first plate 6 through which the mobile contact passes. The first plate 6 forms a sealed landing for the mobile contact 3 that can slide in the tube while being free to move in translation along the AX axis. The leakproofness is provided by a bellows which is not shown in the figures. This cylindrical wall 4 is closed at its other end by a second plate or base 7 supporting the fixed contact.

The mobile contact 3 that can move along the AX axis comprises a rod 8 forming its body.

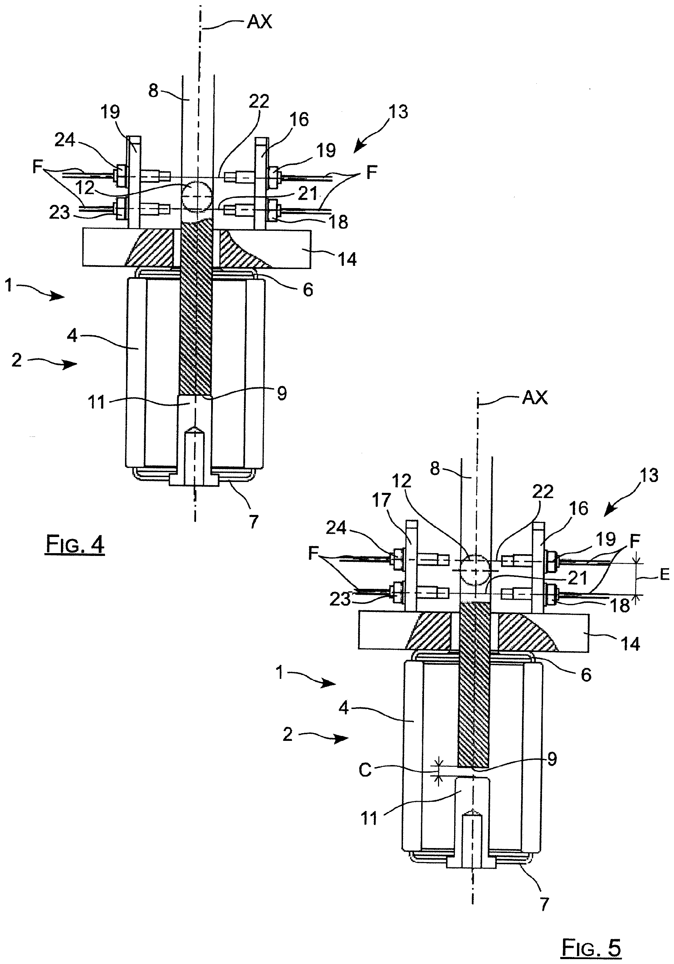

The second end of the rod 8 located inside the tube and visible in figures 4 to 7 in which it is identified as mark 9, forms the electrical contact tip or key that can cooperate with the fixed contact 11 shown in figures 4 to 7.

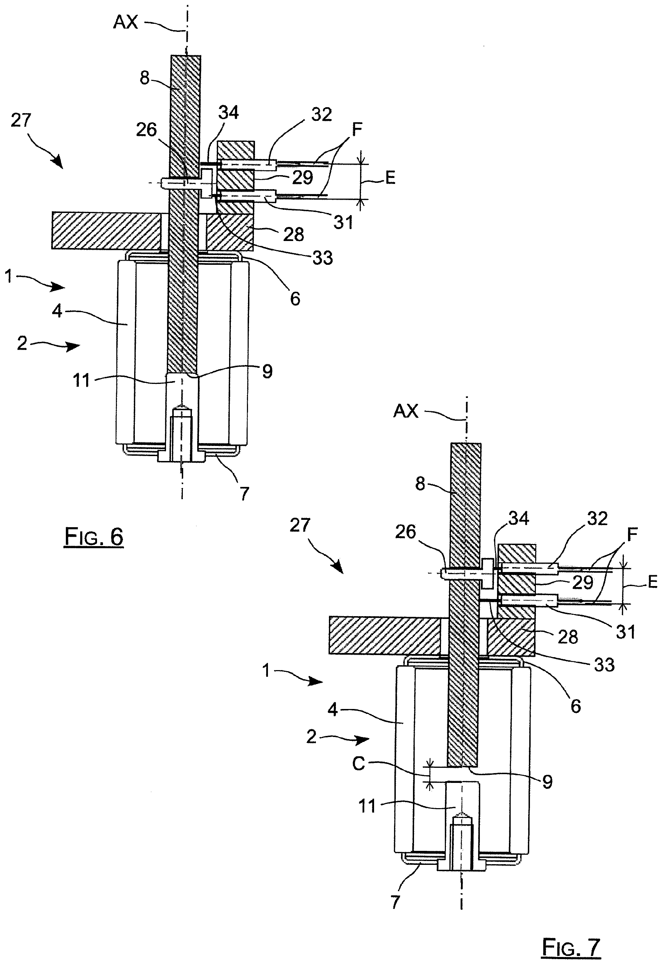

This contact tip 9 is thus at a distance from the fixed contact 11 when the mobile contact 3 is in its electrically open position as it is in figures 2, 5 and 7. On the contrary, this contact tip 9 bears on the fixed contact 11 when the mobile contact 3 is in its electrically closed position as in figures 4 and 6.

The travel distance of the mobile contact 3, in other words the distance that it travels to move from its open position to its closed position, is very small and in practice equal to a few millimeters. This small travel distance is possible in particular due to the fact that the electrical contact opens or closes a gap inside the dielectric medium formed by the inside of the tube in which the vacuum is maintained.

Nevertheless, the open position is at a distance from the closed position due to the fact that an electrical arc can ignite and burn during an opening operation if the contact separation is smaller than a given minimum distance. Thus, the system is not electrically open until the mobile contact has reached its open position or at least exceeded this minimum distance.

The device according to the invention comprises a pad cooperating with two light beams output from two emitters, and their associated receivers. In the two embodiments shown in the figures, the pad is attached to the mobile contact, and the light beam emitters and receivers are supported on the fixed element that in this case is the tube. A reverse assembly could be envisaged.

As can be seen in figure 2, the pad marked 12 is rigidly fixed to the rod 8 of the mobile contact 3 that supports it. This pad 12 comprises a cylindrical head extended by a shank or rod that is engaged to pass through the rod 8. The cylindrical head is prominent so that it can intercept light beams.

The cylindrical head of the pad 12 thus has its axis of revolution perpendicular to the axis AX of displacement of the mobile contact in the tube.

Additionally, the vacuum interrupter 1 is fitted with an upper base 13 supported on the plate 6 to which it is rigidly fixed, which comprise a central opening through which the rod 8 of the mobile contact passes. This upper base 13 comprises a support plate 14 with an orientation perpendicular to the AX axis, fitted with a first cleat 16 and a second cleat 17 extending parallel to the AX axis and located on each side of the cylindrical head of the pad 12.

The first cleat 16 supports a first and a second emitter 18 and 19 that generate a first light beam 21 and a second light beam 22 respectively. In this case, these two light beams 21, 22 are contained in a plane parallel to the AX axis that is perpendicular to the axis of revolution of the pad 12. In this case, these beams are parallel while being oriented perpendicular to the axis AX of displacement of the mobile contact.

Each emitter 18, 19 comprises a nozzle connected to a light source through one or several optical fibers F, to generate a light beam.

The second cleat 17 supports a first receiver 23 and a second receiver 24 located along the extension of the first light beam 21 and along the extension of the second light beam 22 respectively, in other words facing the emitters.

Similarly, each receiver 23, 24 comprises a nozzle connected to an optical sensor through one or several optical fibers F, to generate a light beam.

The light sources and optical sensors are advantageously contained in a control unit identified as mark UC in figure 2 that can thus be located at a distance from the body of the vacuum interrupter so that there is no risk of a high voltage being applied to it.

As can be seen in figure 4, when the mobile contact 3 is in its first position, in other words its closed position in which the contact tip 9 is bearing against the fixed contact 11, the pad 12 intercepts the first light beam 21 but not the second beam 22. The same would apply if the mobile contact would be in a position before this first position.

In this situation, the first receiver 23 does not receive either light beam, while the second receiver 24 does receive the second light beam 22 because it is not intercepted.

The control unit UC connected by optical fibers thus concludes that the mobile contact 3 occupies the first position, in other words the position in which the switch is electrically closed.

When the mobile contact 3 occupies its second position, in other words its open position as in figure 5, the contact tip 9 is at a distance from the fixed contact 11 equal to C corresponding to its travel distance, and the pad 12 intercepts the second beam 22 but not the first beam 21.

The control unit UC connected to the receivers 23 and 24 can thus conclude that the mobile contact 3 is in the second position, in other words its open position. The same applies if the mobile contact is beyond this second position, in other words if it is further away from the fixed contact 11.

Advantageously, lock-in signal techniques are implemented in the control unit UC to drive the light source and the receivers, in order to render the system insensitive to parasitic external light.

As mentioned above, the pad 12 is oriented along a direction perpendicular to the axis of displacement AX of the mobile contact supporting this pad 12, such that its length along this displacement axis AX corresponds to the diameter of its cylindrical head.

The beams 21 and 22 are separated from each other by a spacing E corresponding approximately to the diameter of the head of the pad, plus the travel distance C, in other words the distance separating the open position from the closed position of the mobile contact.

The distance separating the two positions to be detected, namely in this case the distance or the travel distance C can thus be very small compared with the dimensions of the pad, while being detected reactively, precisely and reliably.

In this first embodiment, interception of a beam by the pad 12 interrupts this beam that is thus no longer detected by the corresponding receiver.

In the second embodiment of the invention, the pad is reflecting such that when it intercepts a beam, it reflects the beam such that this beam is received by the corresponding receiver when it is intercepted by the pad that reflects it.

In this second embodiment, a reflecting pad 26 is mounted on the rod 8 of the mobile contact of the vacuum interrupter 1 that is identical to that shown in the other figures. The remainder of the detection device is also supported on a fixed base 27 fixed to the plate 6 and surrounding the rod 8 of the mobile contact 3.

This base 27 also has a main plate 28, but this plate supports a single attachment cleat 29 on which a first emission-reception module 31 and a second emission-reception module 32 are fixed.

The first module 31 comprises an emitter to emit a first light beam 33, and a receiver to receive this beam when it is reflected parallel to itself by the pad 26. Similarly, the second module 32 comprises a second emitter to emit a second light beam 34 and a second receiver to receive this beam when it is reflected parallel to itself by the pad 26.

As can be seen in figure 3, the pad 26 is also orientated perpendicular to the direction of displacement AX of the mobile contact 3, but each emitter-receiver module 31, 32 is oriented parallel to the axis of the pad to face it.

More specifically, the axis of the beams 33 and 34 and the axis of the pad 12 are parallel to each other and are coplanar with a plane also containing the axis of displacement AX, the modules 31 and 32 also being separated from each other along the AX axis by a spacing value E corresponding approximately to the travel distance C of the mobile contact 3 plus the diameter of the pad 26, as in the first embodiment.

Each of the two emission-reception modules 31, 32 is connected to a light source by one or several optical fibers F and to a light sensor by one or several other optical fibers F. The light sources and the sensors form part of the control unit UC shown in figure 3, which is thus at a distance from the body of the vacuum interrupter. The control unit UC is thus protected from risks related to the immediate electrical environment of the high voltage switch.

In this second embodiment, when the mobile contact 3 occupies the first position as in figure 6 in which its contact tip 9 is bearing on the fixed contact 11, the first beam 33 is intercepted by the reflecting pad 26 while the second beam 34 is not intercepted.

Under these conditions, the first beam 33 is at least partly reflected parallel to itself, such that it is received by the first receiver that is integrated into the first module 31. The second beam 34 is not intercepted by the pin 26, and therefore is not reflected and is not received by the receiver in the second module 32.

Under these conditions, the control unit UC connected to the modules 31 and 32 has information (detection of the first beam and non-detection of the second beam) by which it can conclude that the mobile contact is in its first position, in other words its closed position. The same would apply if the mobile contact would be located before this first position.

On the other hand, when the mobile contact is in its open position, in other words when the distance between its contact tip 9 and the fixed contact 11 is approximately equal to C equal to its travel distance, the pad 26 is then in a position such that it intercepts and reflects the second beam 34 while it does not intercept the first beam 33.

The first beam is then not received by the receiver of the first module 31, while the second beam that is reflected parallel to itself by the pad 26 is received by the receiver of the second module 32.

Once again, the control unit UC then has information (non-detection of the first beam and detection of the second beam) by which it can conclude that the mobile contact 3 is in its open position. The same applies if the mobile contact is beyond this second position, in other words if it is even further from the fixed contact 11.

In the examples shown in figures 3, 6 and 7, the emitters and receivers are nozzles to which optical fibers F transporting light are connected, the light being generated and tested at the control unit UC located at a distance from the detection elements. This control unit UC can thus be positioned at a distance from the vacuum interrupter that is in a high electrical voltage environment. The control unit is thus electrically isolated from the vacuum interrupter. The system may also be made insensitive to parasite light by modulating light generated by the light source, and making use of this modulation during detection. Lock-in signal techniques are then implemented in the control unit UC to drive the light source and the receivers, in order to render the system insensitive to parasitic external light.

In the embodiments shown in the figures, the device can determine if the mobile contact is located before the first position or after the second position that are located one after the other along the displacement axis AX that in this case is a linear displacement axis. But the invention is also applicable to a device in which the mobile element could be displaced in rotation, and in this case its mobility axis would be a rotation axis.

Concerning the precision of detection, the device may be in one among three possible states:
- the first beam is intercepted but the second beam is not intercepted, which implies that the mobile contact is in its first position or is before this first position;
- neither of the beams are intercepted, which corresponds to an undetermined state in which the mobile contact is in an intermediate position; this is the case during displacement from one position to another;
- the first beam is not intercepted but the second beam is intercepted which implies that the mobile contact is in the second position or is beyond it.

Furthermore, in the examples in the figures, the light sources and the sensors are at a distance from the emitters and receivers. But the invention is equally applicable to a detection device in which the light sources are integrated into the emitters and in which the light sensors are integrated into the receivers. The control unit can thus be close to or even integrated into the components of the detection device.

The invention is generally applicable to any mechanical system for which it is required to reactively, reliably and precisely determine the position of an element free to move in translation or rotation.

The invention can be used for contactless detection of a low amplitude displacement reliably and immediately, even in an environment with high and severe electro-magnetic field. The control unit may be at a distance so that it can be electrically isolated from components specific to the detection device, which facilitates integration into a severe electro-magnetic environment such as a high voltage zone.

The first receiver and the second receiver provide additional information that can be compared to provide redundancy and make it possible to identify a system failure.

In the examples above, the invention is used to determine the position of an electrical contact movable in a severe electro-magnetic field. But the invention can also be used to determine accurately the position of another element in an electro-magnetic field, such as for example the floater of a gauge.

## Claims

1. Detection device to determine if a mobile element (3) installed in an severe electro-magnetic field is located whether at or before a first position, or at or after a second position, the first and second positions being at a distance from each other relative to a fixed element (14 ; 28), this device comprising a first emitter (18 ; 31) of a first light beam (21 ; 33) and a second emitter (19 ; 32) of a second light beam (22 ; 34), a pad (12 ; 26) to be fixed to the mobile element (3) to reflect each light beam (21, 22 ; 33, 34) depending on the position of the mobile element, a first receiver (23 ; 31) to receive the first light beam (21 ; 33) and a second receiver (24 ; 32) to receive the second light beam (22 ; 34) to determine if the first light beam (21 ; 33) is reflected by the pad (12 ; 26) and if the second light beam (22 ; 34) is reflected by the pad (12 ; 26) depending on whether or not these beams are received by the receivers (23, 24 ; 31, 32), each receiver (24, 32) and corresponding emitter (18 ; 31) being contiguous and oriented parallel to each other and designed to be fixed to the fixed element (14 ; 28), the pad (12 ; 26) and the emitters (18, 19 ; 31, 32) being positioned such that:
- when the mobile element (3) is at or before the first position, the pad (12 ; 26) reflects the first beam (21 ; 33) without reflecting the second beam (22 ; 34);
- when the mobile element (3) is at or after the second position, the pad (12 ; 26) reflects the second beam (22 ; 34) without reflecting the first beam (21 ; 33).

2. Device according to claim 1, in which the emitters (18, 19 ; 31, 32) and receivers (23, 24 ; 31, 32) are supported on a base (13 ; 27) that will be fixed to the fixed element (6), the pad (12 ; 26) being designed to be fixed on the mobile element (3).

3. Device according to claim 1, comprising a first module (31) containing the first emitter and the first receiver, and a second module (32) containing the second emitter and the second receiver.

4. Device according to one of the previous claims, in which the emitters (18, 19 ; 31, 32) are oriented parallel to each other along a direction perpendicular to the direction of displacement (AX) of the mobile element (8), the emitters being spaced at a distance from each other by a difference (E) corresponding to the length of the pad along the direction of displacement (AX) plus the distance (C) separating the first position from the second position along the direction of displacement.

5. Device according to one of the previous claims, comprising means of connecting each light beam (21, 22 ; 33, 34) emitter (18, 19 ; 31, 32) to a light source by at least one optical fiber, and means of connecting each light beam (21, 22 ; 33, 34) receiver (23, 24 ; 31, 32) to a light sensor by at least one optical fiber.

6. Device according to claim 5, comprising a control unit (UC) connected to each emitter (18, 19 ; 31, 32) and to each receiver (23, 24 ; 31, 32) by optical fibers, this control unit (UC) comprising at least one light source and at least one light sensor.

7. Device according to claim 6, wherein the control unit (UC) uses lock-in techniques to be insensitive to parasitic light.

8. Vacuum switch, such as an isolating switch or a circuit breaker, fitted with a device according to one of the previous claims.

## Patentansprüche

1. Nachweisvorrichtung zur Feststellung, ob ein in einem schweren elektromagnetischen Feld installiertes bewegliches Element (3) sich an oder vor einer ersten Position oder an oder nach einer zweiten Position befindet, wobei die erste und die zweite Position relativ zu einem feststehenden Element (14; 28) voneinander beabstandet sind, wobei diese Vorrichtung einen ersten Emitter (18; 31) eines ersten Lichtstrahls (21; 33) und einen zweiten Emitter (19; 32) eines zweiten Lichtstrahls (22; 34) umfasst, ein Pad (12; 26), das an dem beweglichen Element (3) zu befestigen ist, um jeden Lichtstrahl (21, 22; 33, 34) in Abhängigkeit von der Position des beweglichen Elements zu reflektieren, einen ersten Empfänger (23; 31) zum Empfangen des ersten Lichtstrahls (21; 33) und einen zweiten Empfänger (24; 32) zum Empfangen des zweiten Lichtstrahls (22; 34), um festzustellen, ob der erste Lichtstrahl (21; 33) von dem Pad (12; 26) reflektiert wird und ob der zweite Lichtstrahl (22; 34) von dem Pad (12; 26) reflektiert wird, abhängig davon, ob diese Strahlen von den Empfängern (23, 24; 31, 32) empfangen oder nicht empfangen werden, wobei jeder Empfänger (24, 32) und der entsprechende Emitter (18; 31) zusammenhängend und parallel zueinander ausgerichtet sind und dazu bestimmt sind, an dem feststehenden Element (14; 28) befestigt zu werden, wobei das Pad (12; 26) und die Emitter (18, 19 ; 31, 32) so positioniert sind, dass:
- wenn sich das bewegliche Element (3) in oder vor der ersten Position befindet, das Pad (12; 26) den ersten Strahl (21; 33) reflektiert, ohne den zweiten Strahl (22; 34) zu reflektieren;
- wenn sich das bewegliche Element (3) in oder nach der zweiten Position befindet, das Pad (12; 26) den zweiten Strahl (22; 34) reflektiert, ohne den ersten Strahl (21; 33) zu reflektieren.

2. Vorrichtung nach Anspruch 1, bei der die Emitter (18, 19; 31, 32) und Empfänger (23, 24; 31, 32) auf einer Grundplatte (13; 27) getragen werden, die an dem feststehenden Element (6) befestigt wird, wobei das Pad (12; 26) dazu bestimmt ist, an dem beweglichen Element (3) befestigt zu werden.

3. Vorrichtung nach Anspruch 1, umfassend ein erstes Modul (31), das den ersten Emitter und den ersten Empfänger enthält, und ein zweites Modul (32), das den zweiten Emitter und den zweiten Empfänger enthält.

4. Vorrichtung nach einem der vorstehenden Ansprüche, bei der die Emitter (18, 19; 31, 32) parallel zueinander in einer Richtung senkrecht zur Verschieberichtung (AX) des beweglichen Elements (8) ausgerichtet sind, wobei die Emitter in einem Abstand voneinander durch eine Differenz (E) angeordnet sind, die der Länge des Pads entlang der Verschieberichtung (AX) plus dem Abstand (C) entspricht, der die erste Position von der zweiten Position entlang der Verschieberichtung trennt.

5. Vorrichtung nach einem der vorstehenden Ansprüche, umfassend Mittel zur Verbindung jedes Lichtstrahls (21, 22; 33, 34) eines Emitters (18, 19; 31, 32) mit einer Lichtquelle durch mindestens eine optische Faser, und Mittel zur Verbindung jedes Lichtstrahls (21, 22; 33, 34) des Empfängers (23, 24; 31, 32) mit einem Lichtsensor durch mindestens eine optische Faser.

6. Vorrichtung nach Anspruch 5, umfassend eine Steuereinheit (UC), die mit jedem Emitter (18, 19; 31, 32) und jedem Empfänger (23, 24; 31, 32) durch optische Fasern verbunden ist, wobei diese Steuereinheit (UC) mindestens eine Lichtquelle und mindestens einen Lichtsensor umfasst.

7. Vorrichtung nach Anspruch 6, wobei die Steuereinheit (UC) Lock-In-Techniken verwendet, um gegenüber parasitärem Licht unempfindlich zu sein.

8. Vakuumschalter, wie z. B. ein Trennschalter oder ein Leistungsschalter, der mit einer Vorrichtung nach einem der vorstehenden Ansprüche ausgestattet ist.

## Revendications

1. Dispositif de détection pour déterminer si un élément mobile (3) installé dans un champ électromagnétique sévère est situé dans ou avant une première position, ou dans ou après une seconde position, les première et seconde positions étant à une certaine distance l'une de l'autre par rapport à un élément fixe (14; 28), ce dispositif comprenant un premier émetteur (18 ; 31) d'un premier faisceau lumineux (21 ; 33) et un second émetteur (19 ; 32) d'un second faisceau lumineux (22 ; 34), une plaquette (12 ; 26) à fixer à l'élément mobile (3) pour réfléchir chaque faisceau lumineux (21, 22; 33, 34) en fonction de la position de l'élément mobile, un premier récepteur (23 ; 31) pour recevoir le premier faisceau lumineux (21 ; 33) et un second récepteur (24 ; 32) pour recevoir le second faisceau lumineux (22 ; 34) pour déterminer si le premier faisceau lumineux (21 ; 33) est réfléchi par la plaquette (12 ; 26) et si le second faisceau lumineux (22 ; 34) est réfléchi par la plaquette (12 ; 26) selon que ces faisceaux sont reçus ou non par les récepteurs (23, 24; 31, 32), chaque récepteur (24, 32) et émetteur correspondant (18 ; 31) étant contigus et orientés parallèlement l'un à l'autre et conçus pour être fixés à l'élément fixe (14 ; 28), la plaquette (12 ; 26) et les émetteurs (18, 19 ; 31, 32) étant positionnés de sorte que :
- lorsque l'élément mobile (3) est dans ou avant la première position, la plaquette (12 ; 26) réfléchisse le premier faisceau (21 ; 33) sans réfléchir le second faisceau (22 ; 34) ;
- lorsque l'élément mobile (3) et dans ou après la seconde position, la plaquette (12 ; 26) réfléchisse le second faisceau (22 ; 34) sans réfléchir le premier faisceau (21 ; 33).

2. Dispositif selon la revendication 1, dans lequel les émetteurs (18, 19; 31, 32) et les récepteurs (23, 24; 31, 32) sont supportés sur une base (13 ; 27) qui sera fixée à l'élément fixe (6), la plaquette (12 ; 26) étant conçue pour être fixée sur l'élément mobile (3).

3. Dispositif selon la revendication 1, comprenant un premier module (31) contenant le premier émetteur et le premier récepteur, et un second module (32) contenant le second émetteur et le second récepteur.

4. Dispositif selon l'une quelconque des revendications précédentes, dans lequel les émetteurs (18, 19 ; 31, 32) sont orientés parallèlement l'un à l'autre le long d'une direction perpendiculaire à la direction de déplacement (AX) de l'élément mobile (8), les émetteurs étant espacés d'une certaine distance l'un de l'autre par une différence (E) correspondant à la longueur de la plaquette le long de la direction de déplacement (AX) plus la distance (C) séparant la première position de la seconde position le long de la direction de déplacement.

5. Dispositif selon l'une quelconque des revendications précédentes, comprenant des moyens de connexion de chaque émetteur (18, 19 ; 31, 32) de faisceaux lumineux (21, 22 ; 33, 34) à une source de lumière par au moins une fibre optique, et des moyens de connexion de chaque récepteur (23, 24; 31, 32) de faisceaux lumineux (21, 22 ; 33, 34) à un capteur de lumière par au moins une fibre optique.

6. Dispositif selon la revendication 5, comprenant une unité de commande (UC) connectée à chaque émetteur (18, 19 ; 31, 32) et à chaque récepteur (23, 24 ; 31, 32) par des fibres optiques, cette unité de commande (UC) comprenant au moins une source de lumière et au moins un capteur de lumière.

7. Dispositif selon la revendication 6, dans lequel l'unité de commande (UC) utilise des techniques de blocage pour être insensibles à la lumière parasite.

8. Commutateur à vide, tel qu'un commutateur isolant ou un disjoncteur de circuit, pourvu d'un dispositif selon l'une quelconque des revendications précédentes.
